# EUROPÄISCHE PATENTANMELDUNG

(11) **EP 0 817 453 A2**
(43) Veröffentlichungstag der Anmeldung: **07.01.1998**
(21) Anmeldenummer: 97401502.6
(22) Anmeldetag: 26.06.1997
(51) Int. Cl.: H04M 3/42, H04M 7/00, H04Q 3/00

(54) **Verfahren zum Versenden einer Nachricht sowie Diensteinheit, Dienstrechner und Kommunikationsnetz**

(30) Priorität: 28.06.1996 DE 19625829
(71) Anmelder: ALCATEL ALSTHOM COMPAGNIE GENERALE D'ELECTRICITE, 75008 Paris (FR)
(72) Erfinder: Lautenschlager, Wolfgang, 71287 Weissach-Flacht (DE)
(74) Vertreter: Zinsinger, Norbert

(57) **Zusammenfassung**

Die Erfindung betrifft ein Verfahren zum Versenden einer Nachrichten (MES) von einem ersten Endgerät (TE1) an ein zweites Endgerät (TE2) eines Kommunikationsnetzes sowie eine Diensteinheit (SSP1, IP1, SCP) und einen Dienstrechner (SCP) zur Durchführung des Verfahrens. Die Nachricht (MES) wird vom ersten Endgerät (TE1) an eine Diensteinheit (SSP1, IP1, SCP) des Kommunikationsnetzes gerichtet. Weiter wird eine Kennung für das zweite Endgerät (TE2) vom ersten Endgerät (TE1) an die Diensteinheit (SSP1, IP1, SCP) gesendet. Die Diensteinheit (SSP1, IP1, SCP) leitet die Nachricht (MES) sodann aufgrund der Kennung an das zweite Endgerät (TE2) weiter. Bei erfolgreicher Übertragung der Nachricht (MES) werden Verbindungsparameter dieser Übertragung von der Diensteinheit (SSP1, IP1, SCP) ermittelt und zu Nachweiszwecken von der Diensteinheit (SSP1, IP1, SCP) abgespeichert.

## Beschreibung

Die Erfindung betrifft ein Verfahren zum Versenden einer Nachricht von einem ersten an ein zweites Endgerät desselben Kommunikationsnetzes nach dem Oberbegriff von Anspruch 1, eine Diensteinheit für ein Kommunikationsnetz nach dem Oberbegriff von Anspruch 10, einen Dienstrechner für ein Kommunikationsnetz nach dem Oberbegriff von Anspruch 12 und ein Kommunikationsnetz nach dem Oberbegriff von Anspruch 13.

Beim Versenden von Nachrichten innerhalb eines Kommunikationsnetzes besteht öfters das Erfordernis, über einen Nachweis zu Verfügen, der das Versenden der Nachricht belegt.

Die Erfindung geht nun von dem üblichen Verfahren beim Versenden von Fax-Nachrichten aus, wie es beispielsweise in der Bedienungsanleitung für den Fernkopierer Fax 40/45 der Firma Alcatel SEL auf der Seite 62 beschrieben ist.

Zum Versenden einer Fax-Nachricht von einem ersten an ein zweites Endgerät eines Kommunikationsnetzes signalisiert das erste Endgerät eine Verbindungsanforderung mit der Rufnummer des zweiten Endgerätes an das Kommunikationsnetz, das daraufhin eine Verbindung zwischen den beiden Endgeräten aufbaut. Über diese aufgebaute Verbindung wird sodann die Fax-Nachricht übertragen. Nach der Übertragung der Nachricht ermittelt das erste Endgerät Verbindungsparameter dieser Übertragung und druckt diese als Sendereport aus. Dieser Sendereport dient sodann als Nachweis für das Versenden der Nachricht.

Weiter sind IN-Dienste (IN = Intelligent Network) bekannt, die an sie gerichtete Anrufe weiterleiten. Solche Dienste sind beispielsweise in dem Artikel "Dienste in intelligenten Netzen", Elektrisches Nachrichtenwesen Band 63, Nummer 4, 1989, Seiten 331 bis 336, von X. du Vachat et al. beschrieben.

Solche Dienste sind vorteilhaft, wenn bestimmte Funktionen, beispielsweise Notruf, Feuerwehr oder eine bestimmte Firma erreicht werden sollen. Das rufende Endgerät richtet hierbei einen Anruf an eine bestimmte Diensteinheit, die durch eine Zugangskennzahl (beispielsweise 130) und eine Codenummer für diese Funktion addressiert wird. Aufgrund von Parametern wie Herkunft des Rufes, Datum und Uhrzeit wird der Ruf sodann von der Diensteinheit an ein bestimmtes, in der Diensteinheit spezifiziertes Endgerät geleitet.

Auch Fax-Nachrichten können an solch eine Diensteinheit gerichtet und von dieser an ein Endgerät weitergeleitet werden.

Bei den oben beschriebenen bisher bestehenden Möglichkeiten, eine Fax-Nachricht zu versenden, besteht der Nachteil, daß der Sendereport auf einfache Weise gefälscht werden kann und damit seine Beweiskraft als gering angesehen werden muß.

Der Erfindung liegt nun die Aufgabe zugrunde, einen Nachweis für das Versenden einer Nachricht zu erzeugen, der über eine höhere Fälschungssicherheit verfügt.

Diese Aufgabe wird gelöst durch ein Verfahren zum Versenden einer Nachricht nach der Lehre von Anspruch 1 sowie durch eine Diensteinheit, einen Dienstrechner und ein Kommunikationsnetz nach der Lehre von Anspruch 10, 12 bzw. 13.

Der Grundgedanke der Erfindung ist, daß der Nachweis für das Versenden einer Nachricht von einem ersten an ein zweites Endgerät nicht durch eines dieser beiden Endgeräte erzeugt wird, sondern von einem Dritten, einer Diensteinheit, unter deren Kontrolle die Nachricht vom ersten an das zweite Endgerät gesendet wird. Der Dienst nimmt somit eine Treuhand-Funktion wahr. Das erste Endgerät richtet hierfür die Nachricht zusammen mit einer Kennung des zweiten Endgerätes an diese Diensteinheit, die dann die Nachricht an das zweite Endgerät weiterleitet. Verbindungsparamter dieser Übertragung werden von der Diensteinheit ermittelt und zu Nachweiszwecken von der Diensteinheit abgespeichert.

Die Erfindung bringt den Vorteil mit sich, daß der Nachweis weder vom Teilnehmer des ersten noch des zweiten Endgerätes manipuliert werden kann. Untersteht die Diensteinheit weiter der Kontrolle eines zur Unabhängigkeit verpflichteten Dritten, so stellt der von der Diensteinheit abgespeicherte Nachweis einen Nachweis mit hoher Beweiskraft dar.

Es ist weiter vorteilhaft, die gesamte Nachricht in der Diensteinheit zu speichern. Damit steht auch ein Nachweis über den Inhalt der Nachricht zur Verfügung.

Es ist weiter vorteilhaft, die Diensteinheit mittels einer IN-Architektur zur realisieren. Dadurch kann das erfindungsgemäße Verfahren ohne tiefe Eingriffe in die bestehende Telekommunikationsinfrastruktur mit üblichen Endgeräten durchgeführt werden.

Im Folgenden wird die Erfindung anhand von zwei Ausführungsbeispielen unter Zuhilfenahme beiliegender Zeichnungen beispielhaft erläutert.
- Fig. 1: zeigt ein Blockschaltbild eines erfindungsgemäßen Kommunikationsnetzes mit einer erfindungsgemäßen Diensteinheit.
- Fig. 2a: zeigt ein Ablaufdiagramm des erfindungsgemäßen Verfahren für ein erstes Ausführungsbeispiel.
- Fig. 2b: zeigt ein Ablaufdiagramm des erfindungsgemäßen Verfahrens für ein zweites Ausführungsbeispiel.
- Fig. 3: zeigt ein Blockschaltbild eines Ausschnittes der erfirdungsgemäßen Diensteinheit nach Fig. 1.

Im ersten Ausführungsbeispiel wird eine erste Möglichkeit der Durchführung des erfindungsgemäßen Verfahrens zum Versenden von Nachrichten in einem erfindungsgemäßen Kommunikationsnetz erläutert, das über eine erfindungsgemäße Diensteinheit mit einem erfindungsgemäßen Dienstrechner verfügt.

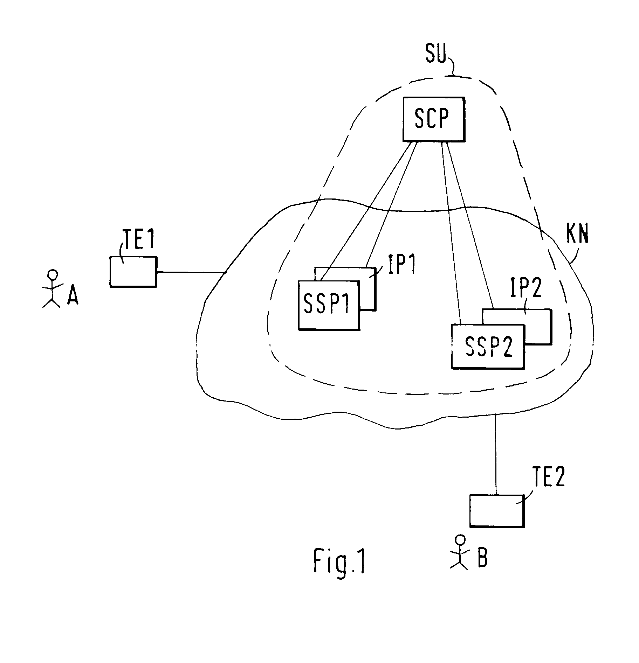

Fig.1 zeigt ein Kommunikationsnetz KN, eine Diensteinheit SU und zwei Endgerät TE1 und TE2, die zwei Teilnehmern TE1 bzw. TE2 zugeordnet sind.

Bei den Endgeräten TE1 und TE2 handelt es sich um Faxsimile-Geräte, die dem Senden und Empfangen von Fax-Nachrichten über ein Fernsprechnetz dienen. Es ist hierbei möglich, daß die Fax-Nachrichten von den Endgeräten in kodierter Form über einen analogen Teilnehmeranschluß des Kommunikationsnetzes oder in digitaler Form über einen ISDN-Teilnehmeranschluß (ISDN= Integrated Services Digital Network) übertragen werden. Bei den Endgeräten TE1 und TE2 kann es sich aber auch um Datenverarbeitungsanlagen handeln, die über Schnittstellenkarten zum Austausch von Nachrichten über das Kommunikationsnetz KN verfügen. Diese Nachrichten können auch einem anderen Nachrichten-Format als dem Fax-Format entsprechen.

Die Diensteinheit SU wird von mehreren Dienstvermittlungstellen SSP1 und SSP2, mehreren Dienstunterstützungssystemen IP1 und IP2 und einer Dienststeuereinheit SCP gebildet, die mit diesen verbunden ist.

Das Kommunikationsnetz KN1 ist wie ein übliches Fernsprechnetz ausgestaltet und enthält so auch mehrere Vermittlungsstellen. Von diesen Vermittlungsstellen sind die in Fig. 1 gezeigten Dienstvermittlungsstellen SSP1 und SSP2 besonders ausgestaltet. Sie übermittlen beim Auftreten von Verbindungsanforderungen mit bestimmten Dienstkennungen als Rufnummer des gerufenen Teilnehmers Anfragen an die Dienststeuereinheit SCP. Auf diese Anfragen erhalten sie Anweisungen, die die weitere Behandlung der Verbindungsanforderung betreffen.

Es ist auch möglich, daß das Kommunikationsnetz KN1 aus mehreren untereinander verbundenen Unternetzen gebildet wird. Solche Unternetze können beispielsweise öffentliche Netze unterschiedlicher Netzbetreiber, private Netze oder Mobilfunknetze sein. Entscheidend ist, daß ein Verbindungungsaufbau zwischen Endgeräten dieser Unternetze möglich ist.

Die Dienstunterstützungssysteme IP1 und IP2 sind der Dienstvermittlungsstellen SSP1 bzw. SSP2 zugeordnet und unterstützen diese bei der Erbringung von Telekommunikations-Diensten, insbesondere bei der Kommunikation mit den Endgeräten des Kommunikationsnetzes KN1. Hierzu verfügen sie über Nutzkanal- und Zeichengabe-Schnittstellen zu den Dienstvermittlungsstellen SSP1 bzw. SSP2. Sie werden durch die Dienststeuereinheiten SCP direkt oder indirekt über die jeweilige der Dienstvermittlungsstellen SSP1 und SSP2 gesteuert.

Es ist auch möglich, daß ein Dienstunterstützungssystem mehreren Dienstvermittlungsstellen zugeordnet ist. Weiter ist es möglich, daß die Funktion der Dienstunterstützungssysteme IP1 und IP in die Dienstvermittlungsstellen SSP1 bzw. SSP2 integriert ist.

Die Dienststeuereinheit SCP stellt einen Dienstrechner dar, der der Steuerung einer oder mehrerer Telekommunikations-Dienste dient. Sie bestehen aus einem oder aus mehreren miteinander verbundenen Rechnern und peripheren Komponenten, die insbesondere eine Datenkommunikation mit den Dienstvermittlungsstellen SSP1 und SSP2 sowie den Dienstunterstützungssystemen IP1 und IP2 ermöglichen.

Es ist auch möglich, daß die Dienst-Einheit SU nur eine Dienstvermittlungsstelle oder mehere Dienststeuereinheit aufweist.

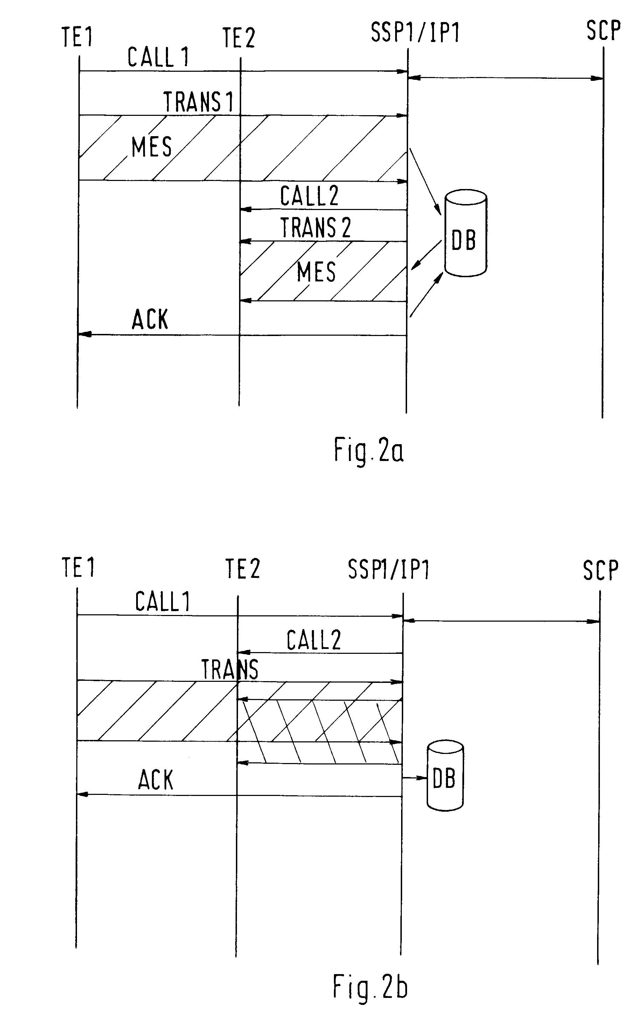

Anhand von Fig. 2a wird im folgenden der Ablauf des erfindungsgemäßen Verfahrens verdeutlicht.

Fig. 2 zeigt die Endgeräte TE1 und TE2 und einen Ausschnitt aus der Dienst-Einheit SU mit der Dienstvermittlungsstelle SSP1, dem zugeordneten Dienstunterstützungssystem IP1 und der Dienststeuereinheit SCP1.

Das Endgerät TE1 richtet eine Nachricht MES an die Diensteinheit SU, indem es eine Verbindungsanforderung CALL mit einer speziellen Dienstekennung als Rufnummer des gerufenen Teilnehmers an das Kommunikationsnetz KN signalisiert. Zusätzlich wird mit der Verbindungsanforderung CALL die Rufnummer des Endgerätes TE2 versendet. Dies wird auf einfache Weise dadurch erreicht, daß die Rufnummer an die Dienstkennung angehängt wird. Der Teilnehmer A wählt soinit die Dienstkennung und anschließend die Rufnummer des Endgerätes TE2.

Es ist auch möglich, daß die Rufnummer des Endgerätes TE2 vom Endgerät Ei auf andere Weise an die Diensteinheit SU übertragen wird. Beispielsweise kann auf den Empfang der Verbindungsanforderung ein Nutzkanal zwischen der Diensteinheit SU und dem Endgerät TE1 aufgebaut werden, über den diese Rufnummer übertragen wird. Auch die Übertragung über einen Signalisierungskanal, beispielsweise den D-Kanal bei einem ISDN-Teilnehmeranschluß, ist möglich.

Dessweiteren ist es möglich, daß das Endgerät TE1 seine eigene Rufnummer zur Identifikation an die Diensteinheit SU überträgt. Dies kann beispielsweise innerhalb der Signalisierung erfolgen, beispielsweise durch die Calling Line Identifikation bei einem ISDN-Anschluß (ISDN =Itegrated Services Digital Network). Eine weitere Möglichkeit ist eine codierte Übertragung der Rufnummer über einen aufgebauten Rückkanal. Insbesondere im zweiten Fall ist es möglich, daß der Dienst nach Empfang der Rufnummer die Verbindung unterbricht und einen Rückruf startet, um somit Sicherheit über die Identifizierung des sendenden Endgerätes TE1 zu haben.

Die Verbindungsanforderung CALL wird durch das Kommunikationsnetz aufgrund der Dienstekennung zu einer der Dienstvermittlungstellen SSP1 und SSP2 geleitet, hier zur Dienstvermittlungsstelle SSP1. Die Dienstvermittlungsstelle SSP1 sendet eine Nachricht mit der Dienstkennung an die Dienststeuereinheit SCP, die daraufhin die dieser Dienstkennung zugeordnete Dienstelogik aktiviert. Die Dienstelogik steuert daraufhin das weitere Verhalten der Dienstvermittlungsstelle SSP1 und des Dienstunterstützungssystems IP1 und damit das Verhalten der Diensteinheit SU.

Die Rufnummer des Endgerätes TE2 wird der Verbindungsanforderung entnommen und in der Dienstvermittlungsstelle SSP1 abgespeichert. Sodann wird von der Dienstvermittlungsstelle SSP1 ein Nutzkanal zwischen dem Endgerät TE1 und der Diensteinheit SU aufgebaut, über den das Endgerät TE1 in einer Teil-Übertragung TRANS1 die Nachricht MES an die Diensteinheit SU überträgt. Die Nachricht wird in einer Datenbank DB des Dienstunterstützungssystems IP1 zu Nachweiszwecken gespeichert. Nach Beenden der Übertragung COM1 wird der Nutzkanal zwischen dem Endgerät TE1 und der Diensteinheit SU abgebaut.

Die Diensteinheit SU richtet nun eine Verbindungsanforderung CALL2 mit der Rufnummer der Endgerätes TE2 als Rufnummer des gerufenen Teilnehmers an das Kommunikationsnetz KN. Nimmt das Endgerät die Verbindungsanforderung CALL2 an, so wird ein Nutzkanal zwischen der Diensteinheit SU und dem Endgerät TE2 aufgebaut. Nimmt das Endgerät die Verbindungsanforderung CALL2 nicht an, so wiederholt die Diensteinheit SU nach einem bestimmten Zeitintervall erneut das signalisieren einer solchen Verbindungsanforderung.

Über den aufgebauten Nutzkanal wird von der Diensteinheit SU sodann in einer Teil-Übertragung TRANS die in der Datenbank DB abgespeicherte Nachricht MES an das Endgerät TE2 übertragen. Nach Beenden der Übertragung der Nachricht MES wird der Nutzkanal zwischen dem Endgerät TE2 und der Diensteinheit SU abgebaut.

Treten Übertragungsfehler bei der Übetragung COM2 auf, so wird von der Diensteinheit SU erneut versucht, die Nachricht MES an das Endgerät TE2 zu übertragen.

Die Diensteinheit SU ermittelt sodann Verbindungsparameter der Übertragung der Nachricht MES vom Endgerät TE1 zum Endgerät TE2. Solche Verbindungsparameter sind beispielsweise die Rufnummern der Endgeräte TE1 und TE2, der Zeitpunkt der Übertragung der Nachricht MES an das Endgerät TE2, die Länge und der Informationsgehalt der Nachricht MES. Es ist auch möglich, daß bei fehlerhafter Übertragung die Tatsache oder die Art des Fehlers als Verbindungsparameter ermittelt wird. Diese Verbindungsparamter werden von der Diensteinheit SU in der Datenbank DB bei der Nachricht MES ebenfals zu Nachweiszwecken abgespeichert.

Es ist auch möglich, daß die Nachricht MES nicht zu Nachweiszwecken gespeichert wird, sondern lediglich für die Übertragung zwischengespeichert wird.

Die Diensteinheit SU signalisiert sodann eine Verbindungsanforderung mit der Rufnummer des Endgerätes TE1 als Rufnummer des gerufenen Endgerätes an das Kommunikationsnetz KN, worauf ein Nutzkanal zwischen der Diensteinheit SU und dem Endgerät TE1 aufgebaut wird. Über diesen Nutzkanal sendet die Diensteinheit SU eine FAX-Nachricht ACK an das Endgerät TE1, die eine Bestätigung der erfolgreichen Übertragung der Nachricht MES an das Endgerät TE2 und die in der Datenbank DB zu Nachweiszwecken gespeicherten Verbindungsparameter zum Inhalt hat. Die Nachricht ACK wird vom Endgerät TE1 als Fax ausgedruckt und steht dem Teilnehmer A somit in gedruckter Form zur Verfügung.

Ist es der Diensteinheit SU nach mehrmaligen Versuchen nicht gelungen, die Nachricht MES an das Endgerät TE2 zu übertragen, so wird als Nachricht ACK eine Nachricht mit dem Inhalt gesendet, daß keine Übertragung der Nachricht an das Endgerät TE2 gelungen ist.

Es ist auch möglich, daß auf das Senden der Nachricht ACK verzichtet wird.

Anhand von Fig. 2b wird im folgenden im Rahmen eines zweiten Ausführungsbeispiels eine weitere Möglichkeit des Ablaufs des erfindungsgemäßen Verfahrens verdeutlicht.

Die Kommunikationsumgebung des zweiten Ausführungsbeispiels ist ebenfals gemäß Fig. 1 gestaltet.

Fig. 2b zeigt die Endgeräte TE1 und TE2 und einen Ausschnitt aus der Dienst-Einheit SU mit der Dienstvermittlungsstelle SSP1, dem zugeordneten Dienstunterstützungssystem IP1 und der Dienststeuereinheit SCP1.

Das Endgerät TE1 richtet eine Nachricht MES an die Diensteinheit SU, indem es eine Verbindungsanforderung CALL mit einer speziellen Dienstkennung als Rufnummer des gerufenen Teilnehmers an das Kommunikationsnetz KN signalisiert. Zusätzlich wird mit der Verbindungsanforderung CALL1 die Rufnummer des Endgerätes TE2 an die Diensteinheit SU gesendet. Die Verbindungsanforderung wird zur Dienstvermittlungsstelle SSP1 geleitet, die daraufhin die der Dienstkennung zugeordnete Dienstelogik in der Dienststeuereinheit SCP aktiviert, die im Weitern den Ablauf in der Diensteinheit SU steuert.

Die Diensteinheit SU leitet sodann die Verbindungsanforderung CALL1 als Verbindungsanforderung CALL2 an das Endgerät TE2 weiter, indem es in die Verbindungsanforderung CALL1 anstelle der Dienstkennung die Rufnummer des Endgerätes TE2 einträgt. Nimmt das Endgerät TE2 die Verbindungsanforderung an, so wird ein Nutzkanal zwischen den Endgeräten TE1 und TE2 aufgebaut, der über die Diensteinheit SU geführt ist. Nimmt das Endgerät die Verbindungsanforderung CALL2 nicht an, so liegt es beim Endgerät TE1, nach einem bestimmten Zeitintervall erneut die Verbindungsanforderung CALL1 zu signalisieren.

Über den aufgebauten Nutzkanal wird von dem Endgerät TE sodann die Nachricht MES in einer Übertragung TRANS über die Diensteinheit SU an das Endgerät TE2 übertragen. Nach Beenden der Übertragung der Nachricht MES wird der Nutzkanal zwischen dem Endgerät TE2 und der Diensteinheit SU abgebaut.

Die Diensteinheit SU ermittelt parallel dazu Verbindungsparameter der Übertragung TRANS der Nachricht MES vom Endgerät TE1 zum Endgerät TE2. Diese Verbindungsparameter werden in der Datenbank DB zu Nachweiszwecken abgespeichert.

Über den noch aufgebauten Nutzkanal zwischen dem Endgerät TE1 und der Diensteinheit SU sendet die Diensteinheit SU sodann eine Nachricht ACK an das Endgerät TE1, die eine Bestätigung der erfolgreichen Übertragung der Nachricht MES an das Endgerät TE2 und die in der Datenbank DB zu Nachweiszwecken gespeicherten Verbindungsparameter zum Inhalt hat.

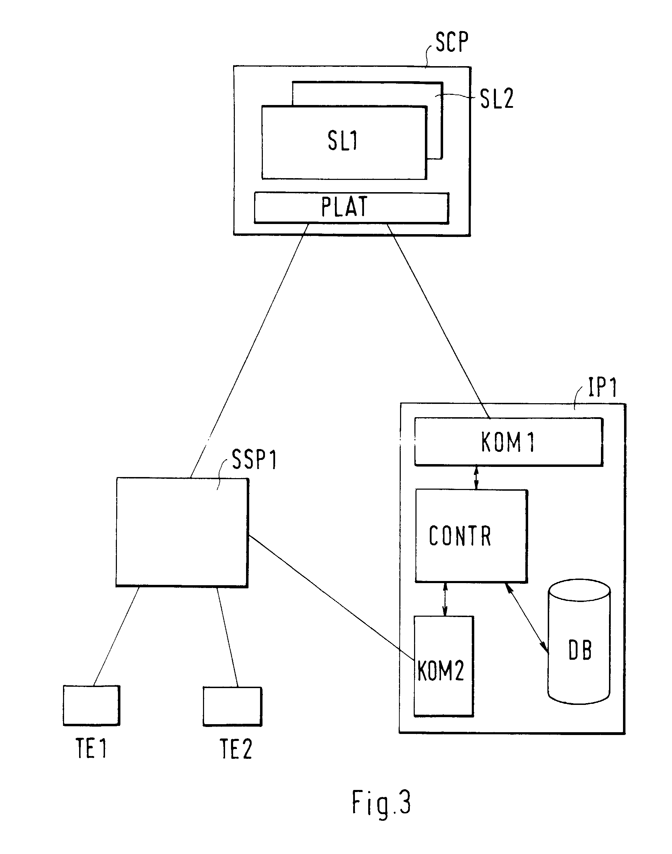

Anhand von Fig. 3 wird nun der detailierte Aufbau der Diensteinheit SU für das erste und das zweite Ausführungsbeispiel erläutert.

Fig. 3 zeigt die Dienststeuereinheit SCP, die Dienstvermittlungsstelle SSP1, das Dienstunterstützungssystem IP1 und die Endgeräte TE1 und TE2.

Die Dienststeuereinheit SCP weist eine Systemplattform PLAT und zwei Dienstelogika SL1 und SL2 auf.

Die Systemplattform PLAT stellt die Soft- und Hardwaremäßige Plattform dar, auf der die Dienstelogika SL1 und SL2 ausmachenden Steuerprogramme ablaufen und die für die generelle Ablaufsteuerung dieser Programme verantwortlich ist. Sie stellt auch die für den Austausch von Nachrichten mit den Dienstvermittlungsstellen SSP1 und SSP2 und den Dienstunterstützungssystemen IP1 und IP2 notwendigen Kommunikationsdienste zur Verfügung. Diese Kommunikation basiert auf einem Signalisierungsnetz nach dem Protokoll Nr. 7 der CCITT, auf dem das INAP-Protokoll (INAP = Intelligent Network Applikation Protokoll) aufsetzt.

Die Dienstelogika SL1 und SL2 stellen jeweils die für die Steuerung eines bestimmten Telekommunikations-Dienstes notwendigen Funktionen zur Verfügung. Sie werden jeweils von einem Dienst-Programm und diesem Dienst-Programm zugeordneten Daten gebildet. Für die Steuerung des erfindungsgemäßen Verfahrens ist hierbei die Dienstelogik SL1 verantwortlich. Die Dienstelogik SL1 wird durch die Platform PLAT beim Empfang der Dienstkennung von der Dienstvermittlungsstelle SSP1 aktiviert. Durch den Austauch von Steuernachrichten steuert sie im Folgenden das Verhalten der Dienstvermittlungsstelle SSP1 und des Dienstunterstützungsstems IP1.

Die Dienstvermittlungsstelle SSP1 verfügt neben den üblichen Funktionsgruppen einer Vermittlungsstelle über eine zusätzliche Steuereinheit, die auf derselben hard- und softwaremäßigen Plattform wie die normale Vermittlungs-Steuerung basiert und die in die Verbindungssteuerung eingreift. Diese Steuereinheit erkennt die Signalisierung einer Verbindungsanforderung mit der Dienstkennung als Rufnummer. Durch die Eingriffsmöglichkeit in die Verbindungssteuerung ist es ihr möglich, die weitere Bearbeitung der Verbindungsanforderung gemäß von der Dienststeuereinheit SCP gesendeten Steuernachrichten zu steuern.

Das Dienstunterstützungssystem IP1 weist zwei Kommunikationseinheiten KOM1 und KOM2, eine Steuereinheit CONTR und die Datenbank DB auf.

Die Kommunikationseinheit KOM1 dient der Kommunikation mit der Dienststeuereinheit SCP. Die Kommunikationseinheit KOM2 ist mit einer Anschlußeinheit der Dienstvermittlungsstelle SSP1 verbunden und stellt die notwendigen Funktionsgruppen bereit, um Daten mit den Endgeräten TE1 und TE2 über einen Nutzkanal auszutauschen.

Die Steuereinheit CONTR steuert das Abspeichern von Verbindungsparametern und von Nachrichten in der Datenbank DB. Die Verbindungsparameter werden von der Dienstelogik ermittelt und dann an die Steuereinheit CONTR über die Kommunikationseinheit KOM1 gesendet. Für das Abspeichern der Nachrichten ES wird von der Dienstvermittlungsstelle SSP1 unter Steuerung durch die Dienstelogik SL1 ein Nutzkanal zwischen dem Endgerät TE1 und der Kommunikationseinheit KOM2 aufgebaut. Diensteparameter und zugeordnete Nachricht werden von der Steuereinheit sodann als zusammengehöriger Datensatz in der Datenbank DB abgelegt.

Es ist auch möglich, daß die Nachricht MES und die Verbindungsparameter von der Steuereinheit CONTR verschlüsselt werden und in verschlüsselter Form in der Datenbank DB abgespeichert werden. Der zugehörige Schlüssel wird sodann in der Nachricht ACK an das Endgerät TE gesendet. Eine Entschlüsselung ist dann nur durch den Teilnehmer A möglich.

Die Datenbank DB ist so ausgestaltet, daß sie für die Speicherung von Daten zu Nachweiszwecken geeignet ist. Insbesondere ist es nur der Diensteinheit SU möglich, auf diese Daten zuzugreifen. Bei der Datenbank DB handelt es sich beispeilsweise um eine oder um mehrere Festplatten oder Band-Laufwerke. Es ist auch möglich, daß anstelle der Datenbank DB eine Druckereinrichtung verwendet wird, die die abzuspeichernden Daten auf Papier oder Folie archiviert.

Es ist weiter möglich, auf die Dienstunterstützungssystem IP1 und IP2 zu verzichten und die Steuereinheit CONTR und die Datenbank in der Dienststeuereinheit SCP bei der Dienstelogik SL1 anzuordnen. Der Empfang der Nachricht MES und das Senden der Nachricht ACK würden hierbei durch Funktionsgruppen der Dienstvermittlungsstellen SSP1 und SSP2 oder eines einfacheren Dienstunterstützungssystems erfolgen. Diese Möglichkeit ist insbesondere dann Sinnvoll, wenn nur Verbindungsparameter zu Nachweiszwecken abgespeichert werden und somit keine großen Datenmengen von der Diensvermittlungsstellle bzw. dem Dienstunterstützungssystem in die Dienststeuereinheit zu laden sind.

Bei der Datenbank DB könnte es sich auch um eine externe Datenbank handeln, die weder dem Dienstrechner SCP noch dem Dienstunterstüzungssystem IP1 zugeordnet ist.

Es besteht auch die Möglichkeit, daß die Diensteinheit eine einzige Vermittlungsstelle ist.

Bei dieser Vermittlungsstelle würde es sich um eine Nebenstellen-Vermittlungsstelle, eine Centrex-Vermittlungsstelle oder um eine normale Vermittlungsstelle handeln, die mit zusätzlichen Funktionen zur Erbringungung von Telekommunikations-Diensten für beliebige Teilnehmer ausgestattet ist. Diese Vermittlungsstelle wäre wie die Vermittlungsstelle SSP1 ausgestaltet, mit dem Unterschied, daß zusätzliche Funktionsgruppen vorhanden sind, die der Dienstelogik SL1, der Datenbank DB und der Steuereinheit CONTR entsprechend. Diese Funktionsgruppen wirken analog zu Fig. 3 zusammen.

## Patentansprüche

1. Verfahren zum Versenden einer Nachricht (MES) von einem ersten Endgerät (TE1) an ein zweites Endgerät (TE2) eines Kommunikationsnetzes (KN), bei dem die Nachricht (MES) an eine Diensteinheit (SU) des Kommunikationsnetzes (KN) gerichtet wird und bei dem die Diensteinheit (SU) die Nachricht (MES) weiterleitet, **dadurch gekennzeichnet**, daß eine Kennung für das zweite Endgerät (TE2) vom ersten Endgerät (TE1) an die Diensteinheit (SU) gesendet wird, daß die Diensteinheit (SU) die Nachricht (MES) aufgrund der Kennung an das zweite Endgerät (TE2) weiterleitet und daß bei erfolgreicher Übertragung der Nachricht (MES) Verbindungsparameter dieser Übertragung von der Diensteinheit (SU) ermittelt und zu Nachweiszwecken von der Diensteinheit (SU) abgespeichert werden.

2. Verfahren nach Anspruch 1, dadurch gekennzeichnet, daß als Verbindungsparameter die Kennung des zweiten Endgerätes (TE2) abgespeichert wird.

3. Verfahren nach Anspruch 1, dadurch gekennzeichnet, daß als Verbindungsparamter eine Kennung für das erste Endgeräte (TE1) abgespeichert wird.

4. Verfahren nach Anspruch 1, dadurch gekennzeichnet, daß als Verbindungsparameter der Zeitpunkt der Übertragung abgespeichert wird.

5. Verfahren nach Anspruch 1, dadurch gekennzeichnet, daß zusätzlich die Nachricht (MES) zu Nachweiszwecken von der Diensteinheit abgespeichert wird.

6. Verfahren nach Anspruch 1, dadurch gekennzeichnet, daß von der Diensteinheit (SU) an das erste Endgerät (TE1) eine Nachricht (ACK) mit den abgespeicherten Parametern gesendet wird.

7. Verfahren nach Anspruch 1, dadurch gekennzeichnet, daß als Kennung die Rufnummer des zweiten Endgerätes (TE2) verwendet wird.

8. Verfahren nach Anspruch 7, dadurch gekennzeichnet, daß vom ersten Endgerät (TE1) an das Kommunikationsnetz (KN) eine Verbindungsanforderung (CALL1) mit einer der Diensteinheit (SU) zugeordneten Dienstkennung und mit der Rufnummer des zweiten Endgerätes (TE2) signalisiert wird.

9. Verfahren nach Anspruch 1, dadurch gekennzeichnet, daß die Nachricht vom ersten Endgerät (TE1) zum zweiten Endgerät (TE2) in Form einer Fax-Nachricht übertragen wird.

10. Diensteinheit (SU) für ein Kommunikationsnetz (KN) mit Mitteln (SSP1, SSP2) zum Weiterleiten einer von einem ersten Endgerät (TE1) des Kommunikationsnetzes (KN) an die Diensteinheit (SU) gerichteten Nachricht (MES) an ein zweites Endgerät (TE2) des Kommunikationsnetzes (KN),
**dadurch gekennzeichnet**, daß die Diensteinheit (SU) mit Mitteln (SSP1, SSP2) zum Empfang einer Kennung für das zweite Endgerät (TE2) vom ersten Endgerät (TE1), mit einer Speichereinheit (DB) zum Abspeichern von Parametern zu Nachweiszwecken und mit einer Steuereinheit (SL) versehen ist, die so ausgestaltet ist, daß sie das Weiterleiten der Nachricht (MES) aufgrund der Kennung an das zweite Endgerät (TE2) veranlaßt und bei erfolgreicher Übertragung der Nachricht (MES) Verbindungsparameter dieser Übertragung ermittelt und deren Abspeicherung zu Nachweiszwecken in der Speichereinheit (DB) veranlaßt.

11. Diensteinheit nach Anspruch 10, dadurch gekennzeichnet, daß die Diensteinheit (SU) eine zentrale Dienststeuereinheit (SCP) und mindestens eine Dienstvermittlungsstellen (SSP1, SSP2) aufweist.

12. Dienstrechner (SCP) für eine Diensteinheit (SU) eines Kommunikationsnetz (KN) mit Mitteln (PLAT) zur Kommunikation mit mindestens einer Vermittlungseinrichtung (SSP1, SSP2) des Kommunikationsnetzes (KN),
**dadurch gekennzeichnet**, daß der Dienstrechner (SCP) mit einer Steuereinheit (SL) versehen ist, die so ausgestaltet ist, daß sie das Weiterleiten einer an die Diensteinheit (SU) gerichteten Nachricht (MES) durch die Vermittlungsstelle (SSP1, SSP2) aufgrund einer vom erste Endgerät (TE1) empfangenen Kennung für das zweite Endgerät (TE2) veranlaßt und bei erfolgreicher Übertragung der Nachricht (MES) Verbindungsparameter dieser Übertragung ermittelt und deren Abspeicherung zu Nachweiszwecken veranlaßt.

13. Kommunikationsnetz (KN) das so ausgestaltet ist, daß Nachrichten (MES) zwischen zwei Endgeräten (TE1, TE2) des Kommunikationsnetzes (KN) mittels des Verfahrens nach Anspruch 1 versendbar sind.
